# FASCICULE DE BREVET EUROPEEN

(11) **EP 2 557 628 B1**
(45) Date de publication et mention de la délivrance du brevet: **30.05.2018**
(21) Numéro de dépôt: 12179551.2
(22) Date de dépôt: 07.08.2012
(51) Int. Cl.: H01M 16/00, H01M 8/04

(54) **Dispositif d'alimentation d'un réseau utilisateur comportant une pile à combustible et un accumulateur d'électricité**
Vorrichtung zur Stromeinspeisung eines Benutzernetzes, die eine Brennstoffzelle und einen Stromakkumulator umfasst
Device for powering a user network comprising a fuel cell and an electricity storage battery

(30) Priorité: 11.08.2011 FR 1157313
(43) Date de publication de la demande: 13.02.2013
(73) Titulaire: Safran Electronics & Defense, 92100 Boulogne-Billancourt (FR)
(72) Inventeur: Gandelin, Alexis, 92100 BOULOGNE-BILLANCOURT (FR); Chovin, Camille, 92100 BOULOGNE-BILLANCOURT (FR); Couturier, Emmanuel, 92100 BOULOGNE-BILLANCOURT (FR)
(74) Mandataire: Lavialle, Bruno François Stéphane

(56) Documents cités:
- EP-A2- 1 306 919
- FR-A1- 2 709 873
- US-A1- 2004 048 119

## Description

L'invention concerne le domaine de la gestion d'alimentation en énergie électrique d'un réseau utilisateur par une pile à combustible associée à un accumulateur.

### ARRIERE PLAN DE L'INVENTION

Il est connu, par exemple des documents brevet EP2320504A1 et FR2 709 873A1, un dispositif d'alimentation combinant des batteries / accumulateurs et une pile à combustible pour alimenter un réseau utilisateur en électricité. Un document US2004/0048119 décrit un dispositif pour alimenter un moteur seul, sans réseau utilisateur. On note que le dispositif d'alimentation du document FR2 709 873A1 propose d'optimiser le fonctionnement de la pile à combustible en commandant un convertisseur à courant continu disposé entre des bornes de la pile à combustible et des bornes communes à un réseau utilisateur et à l'accumulateur. Cette commande du convertisseur à courant continu est telle que l'intensité maximale du courant traversant ce convertisseur est ajustée pour maintenir la tension entre les bornes de la pile à combustible au voisinage d'une valeur prédéterminée pour optimiser le fonctionnement de la pile à combustible. On a constaté que ce dispositif d'alimentation est effectivement utile pour optimiser le rendement de la pile à combustible en la faisant fonctionner à un niveau de tension à ses bornes favorable à son rendement. Toutefois, il est nécessaire d'améliorer le rendement de tels dispositifs d'alimentation électrique comportant une pile à combustible. Par rendement, on entend le rapport entre l'énergie électrique délivrée au réseau utilisateur par l'énergie chimique potentielle apportée à la pile à combustible via le combustible consommé.

### OBJET DE L'INVENTION

L'objet de la présente invention est donc de fournir un dispositif d'alimentation électrique d'un réseau utilisateur, dont les besoins en énergie varient, ce dispositif permettant une amélioration de rendement.

### RESUME DE L'INVENTION

A cet effet, l'invention concerne un dispositif d'alimentation en énergie électrique d'un réseau utilisateur. Ce dispositif comprend :
- une pile à combustible ;
- un accumulateur d'énergie électrique ;
- un convertisseur d'énergie électrique relié d'une part à la pile à combustible et d'autre part à un circuit de charge et décharge de l'accumulateur lui-même relié d'une part à des bornes de l'accumulateur et d'autre part aux bornes d'alimentation du réseau utilisateur.

Le convertisseur est adapté à limiter la capacité de transfert d'énergie électrique de la pile à combustible vers le réseau utilisateur, la pile à combustible étant agencée pour avoir une capacité de production d'énergie électrique variable en fonction de cette capacité de transfert d'énergie électrique, et le dispositif comporte un circuit électronique de pilotage relié d'une part au convertisseur de manière à commander la variation de la capacité de transfert et d'autre part au circuit de charge et décharge pour sélectivement commander le transfert d'énergie électrique de la pile à combustible vers l'accumulateur et le transfert d'énergie électrique de l'accumulateur vers les bornes d'alimentation du réseau utilisateur.

Etant donné que la capacité de production d'énergie électrique de la pile à combustible est variable en fonction de la capacité de transfert d'énergie électrique au travers du convertisseur, le circuit électronique commande indirectement la production d'énergie électrique au niveau de la pile à combustible en commandant le convertisseur pour faire varier sa capacité de transfert. Ainsi, on pilote la pile à combustible en pilotant le convertisseur à l'aide du circuit électronique de commande. Le fait que, contrairement à l'enseignement du document brevet FR2 709 873, ce même circuit de commande soit aussi relié au circuit de charge et de décharge de l'accumulateur permet aussi, à l'aide d'un même circuit électronique, de commander sélectivement la charge ou la décharge de l'accumulateur.

Par conséquent, contrairement à l'enseignement du document brevet FR2 709 873, l'invention permet, de manière centralisée au niveau du circuit électronique de pilotage, de sélectionner la ou les sources d'énergie qui doivent alimenter le réseau utilisateur et de choisir si l'accumulateur doit ou non être rechargé par la pile à combustible. L'invention permet donc une utilisation raisonnée des sources d'énergie en fonction par exemple de la demande au niveau du réseau utilisateur et/ou du niveau de charge de l'accumulateur. L'invention permet ainsi d'augmenter la quantité d'énergie produite à partir d'une quantité donnée de combustible tout en maintenant celle-ci dans un état de fonctionnement satisfaisant où son rendement est optimal (déterminé par exemple en fonction de sa température et/ou de son taux d'humidité).

L'invention permet aussi d'avoir une disponibilité énergétique accrue du fait que la pile à combustible a une forte inertie et que l'accumulateur a une faible inertie mais une capacité de génération d'énergie électrique limitée dans le temps par rapport à la capacité de génération d'énergie électrique par la pile à combustible. L'accumulateur peut donc être utilisé pour répondre aux besoins immédiats du réseau utilisateur le temps que la pile à combustible monte en puissance et puisse prendre le relais de l'accumulateur pour la génération de l'énergie.

### BREVE DESCRIPTION DES DESSINS

D'autres caractéristiques et avantages de l'invention ressortiront clairement de la description qui en est faite ci-après, à titre indicatif et nullement limitatif, en référence :
- à la figure 1 annexée représentant schématiquement un dispositif d'alimentation conforme à l'invention ; et
- à la figure 2 présentant un second mode de réalisation du dispositif d'alimentation selon l'invention.

### DESCRIPTION DETAILLEE DE L'INVENTION

Le dispositif d'alimentation en énergie électrique 1 selon l'invention comprend une pile à combustible PAC de type connu telle qu'une pile à combustible hydrogène conforme au document brevet EP2320504A1. Cette pile à combustible présente une capacité de production d'énergie électrique qui est variable en fonction de la quantité d'énergie électrique produite par la pile à combustible et effectivement consommée. En d'autres termes la puissance électrique délivrée par la pile va en augmentant dès lors que l'on augmente la puissance électrique pouvant être transférée au niveau des sorties de la pile.

Un convertisseur d'énergie électrique 5 est relié aux bornes de sortie de la pile à combustible PAC via un filtre de protection 10 disposé entre la pile et le convertisseur. Ce filtre 10 protège la pile PAC contre un risque de retour de courant vers la pile et protège le convertisseur contre un risque de surtension, de surintensité, de surpuissance accidentellement générée par la pile PAC.

Le filtre 10 et la pile PAC sont prévus pour générer une tension d'alimentation aux bornes d'entrée du convertisseur 5 qui est continue et comprise entre 4 et 36 Volts maximum.

Le convertisseur 5 est un hacheur série constituant une alimentation à découpage qui convertit une tension d'entrée continue en une autre tension continue de plus faible valeur qui est appliquée au niveau de bornes d'entrée d'un circuit de charge et de décharge 6. La tension en sortie de convertisseur est continue et comprise entre 18 et 28 Volts. Le convertisseur comporte une entrée de consigne permettant de fixer une capacité de transfert d'énergie entre les bornes d'entrée et de sortie du convertisseur en fonction d'une consigne Cons transf.

Typiquement, on fait varier la capacité de transfert d'énergie du convertisseur en faisant varier une résistance électrique du convertisseur 5 entre ses bornes d'entrée et de sortie. En imposant la tension de sortie du convertisseur par la variation de la résistance, on pilote la tension d'entrée du convertisseur et par conséquent on pilote indirectement la pile à combustible PAC. En effet, la pile à combustible a une capacité de production d'énergie qui est prévue pour augmenter lorsque la capacité de transfert d'énergie du convertisseur augmente et préférentiellement lorsqu'elle passe d'une première valeur prédéterminée de capacité de transfert à une seconde valeur prédéterminée de capacité de transfert, la seconde valeur étant supérieure à la première valeur.

Le circuit de charge et de décharge 6 comporte des entrées 29 reliées aux bornes de sortie du convertisseur 5 et des sorties 30 du circuit de charge et de décharge 6 reliées à un accumulateur 4 de type lithium / ion.

Le circuit de charge et décharge 6 comporte aussi des sorties reliées aux bornes 8 d'alimentation du réseau utilisateur 2.

Le circuit de charge et de décharge 6 autorise la charge de l'accumulateur lorsqu'une tension mesurée entre les entrées 29 est supérieure à une tension mesurée entre des sorties 30 reliées à l'accumulateur 4.

Ce circuit 6 autorise la décharge de l'accumulateur vers les bornes d'alimentation 8 du réseau utilisateur 2, au travers du circuit de charge et décharge 6, uniquement lorsqu'une tension mesurée entre les sorties 30 est supérieure à une tension mesurée entre les bornes d'alimentation 8 du réseau utilisateur 2 et à la condition qu'une consigne de charge ou de décharge Cons chgt générée par un circuit électronique de pilotage 9 l'y autorise.

Afin d'être compatible avec la batterie de type lithium / ion, le circuit de charge et de décharge 6 fait varier, progressivement, sur une période de temps donnée la tension délivrée à l'accumulateur 4 via les sorties 30 du circuit de charge et de décharge 6 jusqu'à atteindre une tension de charge constante en l'occurrence comprise entre 11V et 17,4V.

Le circuit électronique de pilotage 9 est intégré dans une carte de gestion 16 et comporte un micro contrôleur et une mémoire pour stocker des informations préenregistrées telles que :
- une cartographie recensant différents états théoriques de la pile à combustible PAC en fonction de paramètres de fonctionnement théoriques de la pile ; et/ou
- des règles de génération de la consigne de transfert Cons transf et de la consigne de charge ou de décharge Cons chgt en fonction de paramètres représentatifs de l'état de fonctionnement de la pile PAC.

Ce circuit de pilotage 9 comporte aussi :
- des entrées d'alimentation du circuit 9 en 3.3V et 2.5V ;
- des entrées pour recevoir des signaux représentatifs de paramètres courants de fonctionnement du dispositif tels que la température T°Pac, l'hygrométrie H2O, la position Pvan de la vanne d'arrivée de combustible 11 et/ou d'une vanne de vidange de pile 11b, la vitesse de ventilateurs Vvent de refroidissement de la pile PAC, la puissance électrique courante Ppac produite par la pile, l'intensité du courant Ipac et la tension du courant Upac, la quantité d'énergie électrique produite par la pile sur une période de temps donnée QPac, qui sont mesurées par des capteurs 27 d'énergie de la pile PAC, une température extérieure à la pile T°ext, la puissance Puti, l'intensité Iuti, la tension Uuti courantes consommées par le réseau utilisateur 2 ;
- des sorties de commande pour émettre des consignes telles que la consigne Cons transf pour le convertisseur et la consigne de charge ou décharge Cons chgt pour le circuit de charge et de décharge 6.

Les autres consignes générées par le circuit de pilotage 9 sont :
- la consigne d'alimentation du ventilateur Cons Vent qui est transmise à l'attention d'un régulateur de ventilateur 14 qui gère l'alimentation du ventilateur ;
- la consigne de positionnement de la ou des vannes Cons Pvan qui est émise à l'attention d'un régulateur 15 de positionnement de la ou des vannes 11, 11' ;
- la consigne de chargement ou de déchargement Cons Chgt à l'attention du circuit de chargement 6 ;
- la consigne de température ConsT° à l'attention d'un régulateur de chauffe 20 (de type PWM indiquant qu'il délivre un courant l'alimentation pulsé et modulé en durée) et d'un moyen de chauffe 13 de la pile PAC qui est en l'occurrence un tapis chauffant13 résistif ;
- des consignes pour une interface homme machine 25 (telles que des consignes d'information de l'utilisateur).

Ces consignes sont émises en fonction des paramètres courants du dispositif, de la cartographie de la pile et de règles de génération de consigne prédéterminées.

Le circuit électronique de pilotage 9 :
- évalue la capacité de production d'électricité pouvant être produite par la pile à combustible PAC en fonction de paramètres courants de la pile ;
- évalue l'énergie Puti consommée par le réseau utilisateur 2 ; et
- génère une consigne de charge Cons Chgt de l'accumulateur à l'attention du circuit de charge 6 et une consigne d'augmentation de la capacité de transfert Cons transf à l'attention du convertisseur lorsque la capacité de production d'électricité évaluée est supérieure à l'énergie consommée par le réseau utilisateur Puti ; et
- génère une consigne de décharge Cons Chgt de l'accumulateur 4 et une consigne d'augmentation de la capacité de transfert Cons transf à l'attention du convertisseur 5 lorsque la capacité de production d'électricité évaluée est inférieure à l'énergie consommée par le réseau utilisateur Puti.

L'évaluation de la capacité de production d'électricité de la pile à combustible PAC est fonction de paramètres courants de la pile. Pour cette évaluation, on peut utiliser une base de données cartographique préenregistrée et représentative du fonctionnement type de la pile PAC en fonction de paramètres prédéterminés. En cherchant dans cette base de données cartographique l'état de fonctionnement théorique qui pourrait être atteint par cette pile en partant d'un état courant de la pile, on peut connaître à l'avance la capacité de production d'énergie par cette pile. Le circuit électronique de pilotage 9 peut dès lors générer une consigne Cons transf prévue pour induire une variation de la capacité de production de la pile PAC afin que cette capacité de production soit suffisante pour alimenter le réseau utilisateur et éventuellement recharger l'accumulateur tout en restant dans une zone de fonctionnement satisfaisante de la pile.
La détermination de la valeur de consigne de transfert Cons transf à générer peut être réalisée par un régulateur du circuit électronique de pilotage 9 programmé pour faire tendre le rendement de fonctionnement de la pile vers une valeur théorique prédéterminée de rendement optimum enregistrée dans la cartographie. Cette valeur théorique étant calculée en fonction de l'état de fonctionnement courant de la pile lui-même évalué par des mesures de paramètres courants de fonctionnement de la pile.

Comme indiqué préalablement, le circuit électronique de pilotage 9 est relié au tapis chauffant 13, au ventilateur 12, à une vanne de contrôle 11 de débit de combustible vers la pile PAC, aux capteurs de température de la pile T°Pac et à une vanne d'évacuation d'eau contenue dans la pile 11b permettant de l'assécher (l'eau est un déchet de fonctionnement de la pile de type hydrogène / oxygène).

Les liaisons du circuit électronique de pilotage 9 au moyen de chauffe de la pile 13 et au moyen de refroidissement de la pile 12 permettent de réguler la température de la pile et par conséquent ses caractéristiques de fonctionnement.

Le régulateur de chauffe 20 du tapis de chauffage 13 est relié d'une part aux bornes d'alimentation 8 du réseau utilisateur 2 et d'autre part au tapis de chauffage 13 pour l'alimenter et le réguler via une alimentation à découpage selon une consigne ConsT°. Le circuit de pilotage 9 élabore la consigne d'alimentation du tapis ConsT° en fonction des températures T°ext et T°Pac.

Le régulateur 14 de ventilateur 12 est relié aux bornes de l'accumulateur 8 et au ventilateur 12 pour l'alimenter et le réguler via une alimentation à découpage selon une consigne Cons vent. Le circuit de pilotage 9 élabore la consigne Cons vent et/ou la consigne ConsT°, en fonction du taux d'hygrométrie H2O et/ou de la température de pile T°pac et/ou de la vitesse Vvent du ventilateur 12 et/ou de la température extérieure T°ext, afin d'assécher l'intérieur de la pile et/ou afin de la maintenir à une température donnée.

De même, on peut utiliser la mesure de température de pile pour réguler l'ouverture de la vanne 11 de contrôle de débit de combustible qui est un autre paramètre influent du fonctionnement de la pile et donc de sa température T°Pac.

On voit également sur la figure, une série de régulateurs 21, 22, 23, 24 permettant de réguler un courant d'alimentation de l'électronique de commande qui se trouve dans le convertisseur 5 et dans le circuit électronique de pilotage 9. L'entrée du régulateur de courant 23 est reliée aux bornes 7 de l'accumulateur 4 et une sortie de ce régulateur 23 est d'une part reliée au régulateur 24 pour alimenter l'électronique de commande du convertisseur 5 et d'autre part au régulateur de courant 22 ayant une sortie reliée au circuit de pilotage 9. La sortie du régulateur 22 alimente également un autre régulateur 21 dont les sorties sont elles-mêmes reliées à des entrées d'alimentation du circuit de pilotage 9. L'intérêt de cette cascade de régulateurs 21, 22, 23, 24 est de générer des courants régulés en tensions continues adaptées aux électroniques à alimenter. Par exemple le régulateur 23 génère une tension de 6.2V à partir d'une tension aux bornes 7 de l'accumulateur variant entre 11V et 17,4V. Cette tension de 6,2V permet d'alimenter d'une part le régulateur 24 qui alimente à son tour le convertisseur 5 en courant continu de 6V et d'autre part le régulateur 22 qui génère à son tour une tension continue de 3,3V. Cette tension de 3,3V permet d'alimenter directement une partie du circuit de pilotage 9 et indirectement via le régulateur 21 qui génère une tension de 2,5V à partir de la tension de 3,3V.

On note que le régulateur 24 est un module LDO c'est à dire « Low-dropout regulator » qui signifie régulateur à faible chute de tension.

L'invention porte également sur la méthode de gestion du dispositif selon l'invention. A ce sujet, on note que la capacité de production d'énergie de la pile dépend d'un ensemble de paramètres courants de la pile que sont par exemple son taux d'humidité H2O, l'intensité et la tension du courant produit par la pile Upac, Ipac, la température courante de la pile T°pac, la puissance du courant électrique produit par la pile Ppac.

A l'aide de règles prédéterminées caractérisant le fonctionnement type de la pile on prédétermine des zones de fonctionnement de la pile parmi lesquelles une zone de fonctionnement satisfaisant, dans lequel le rendement de la pile est optimal, et une zone de fonctionnement non satisfaisant. Puis en fonction de paramètres courants de fonctionnement de la pile, le circuit électronique de pilotage 9 détermine si la pile est dans un état de fonctionnement courant appartenant à la zone prédéterminée de fonctionnement satisfaisant ou à la zone prédéterminée de fonctionnement non satisfaisant. Les paramètres de fonctionnement de la pile pour un état de fonctionnement donné sont la température de pile T°pac, le taux d'humidité H2O dans la pile, la tension Upac et l'intensité Ipac du courant produit par la pile éventuellement la puissance Ppac délivrée par la pile, éventuellement la position d'une vanne d'alimentation en combustible de la pile, éventuellement la position d'une vanne de vidange de la pile pour vidanger des produits de son fonctionnement tels de l'eau.

Si l'état de fonctionnement courant de la pile PAC est considéré comme appartenant à la zone prédéterminée de fonctionnement non satisfaisante alors le circuit électronique de pilotage 9 commande, via une consigne Cons transf :
- soit la diminution de la capacité de transfert d'énergie électrique au travers du convertisseur 5 de la pile vers le réseau utilisateur 2, si la pile alimentait déjà le réseau ;
- soit le maintien d'une capacité de transfert nulle, si la pile n'alimentait pas encore le réseau utilisateur 2 et/ou l'accumulateur 4.

Lorsque l'état de fonctionnement courant de la pile passe de la zone de fonctionnement non satisfaisant vers la zone de fonctionnement satisfaisant alors le circuit électronique de pilotage 9 commande, via la consigne de transfert Cons transf, l'augmentation de la capacité de transfert d'énergie au travers du convertisseur 5 jusqu'à un seuil maximum prédéterminé de capacité de transfert.

En cas d'appel d'énergie par le réseau utilisateur supérieur à ce que délivre la pile limitée par le seuil maximum prédéterminé, alors le circuit électronique de pilotage 9 génère :
- une consigne ConsChgt à l'attention du circuit de charge et de décharge 6 pour que l'accumulateur 4 délivre, via le circuit de charge et décharge 6, de l'énergie électrique de l'accumulateur 4 vers les bornes d'alimentation 8 du réseau utilisateur 2 ; et/ou
- une nouvelle consigne Cons transf à l'attention du convertisseur 5 afin que sa capacité de transfert passe au dessus du seuil maximum prédéterminé.

Ainsi, lorsque les capacités de génération de l'accumulateur 4 et de la pile à combustible PAC en état de fonctionnement satisfaisant ne suffisent pas à répondre au besoin énergétique de l'utilisateur Uti, le circuit de charge peut tolérer que la pile à combustible PAC passe dans une zone de fonctionnement non satisfaisant et cela même si le rendement de pile PAC est dégradé.

Toutefois, en fonction de paramètres de fonctionnement courants de la pile PAC et de règles prédéterminés de sécurité (par exemple le dépassement d'un seuil critique de température), le circuit 9 peut générer des actions de type alerte utilisateur et/ou arrêt de fonctionnement de la pile via une nouvelle consigne Cons transf et/ou fermeture de vanne d'alimentation en carburant 11.

On note que pour sécuriser l'utilisateur Uti et l'électronique du dispositif, un circuit de protection électronique 26 comportant une fonction anti-retour de puissance électrique vers le dispositif 1 est disposé en série avec les bornes d'alimentation 8, le courant délivré à l'utilisateur ne pouvant passer que par ce circuit 26.

L'invention porte enfin sur un autre aspect qui est l'évaluation de l'autonomie restante du dispositif.

A cet effet le dispositif 1 comporte un réservoir de combustible Ra relié à la pile, un capteur 27 mesurant les paramètres Ppac, Ipac, Upac représentatifs d'une quantité d'énergie électrique produite par la pile PAC. Ce capteur 27 possède une fonction de compteur de Coulomb pour mesurer l'énergie produite en Coulombs. Le dispositif comporte aussi :
- des moyens d'évaluation 28 intégrés au circuit de pilotage 9 et reliés au capteur de mesure 27 et agencés pour évaluer la quantité de combustible consommée par la pile à combustible en fonction du paramètre mesuré par le capteur de mesure 27 ; et
- des moyens de mémorisation 17 d'au moins une donnée représentative de la quantité évaluée de combustible consommée par la pile PAC et/ou d'une quantité évaluée de combustible restant dans le réservoir Ra.

Ainsi on évalue la quantité de combustible consommée en évaluant la quantité d'énergie électrique produite par la pile PAC. A partir de la quantité évaluée de combustible consommée par la pile et connaissant la quantité de combustible contenue initialement dans le réservoir, on évalue par soustraction, à l'aide des moyens d'évaluation 28, la quantité de combustible restant dans le réservoir Ra.

Le circuit de pilotage 9 enregistre ici la quantité de combustible restant dans le réservoir Ra dans la mémoire 17.

Le réservoir Ra est relié de manière amovible à la pile PAC et une partie au moins des moyens de mémorisation 17 est fixée sur le réservoir Ra. Les moyens de mémorisation 17 sont ici une mémoire de type FLASH fixée au réservoir Ra. Le réservoir peut ainsi être utilisé sur un autre dispositif qui pourra déterminer le niveau de combustible restant dans le réservoir par simple lecture de la mémoire. Au fur et à mesure de l'utilisation de la pile à combustible, le circuit de pilotage 9 remet à jour la quantité restante de combustible dans la mémoire 17.

En outre lesdits moyens d'évaluation 28 sont reliés à une première antenne de communication 19a et la partie des moyens de mémorisation 17 fixée au réservoir est reliée électriquement à une seconde antenne de communication 19b pour permettre une communication sans fil entre le circuit de pilotage 9 et la mémoire 17.

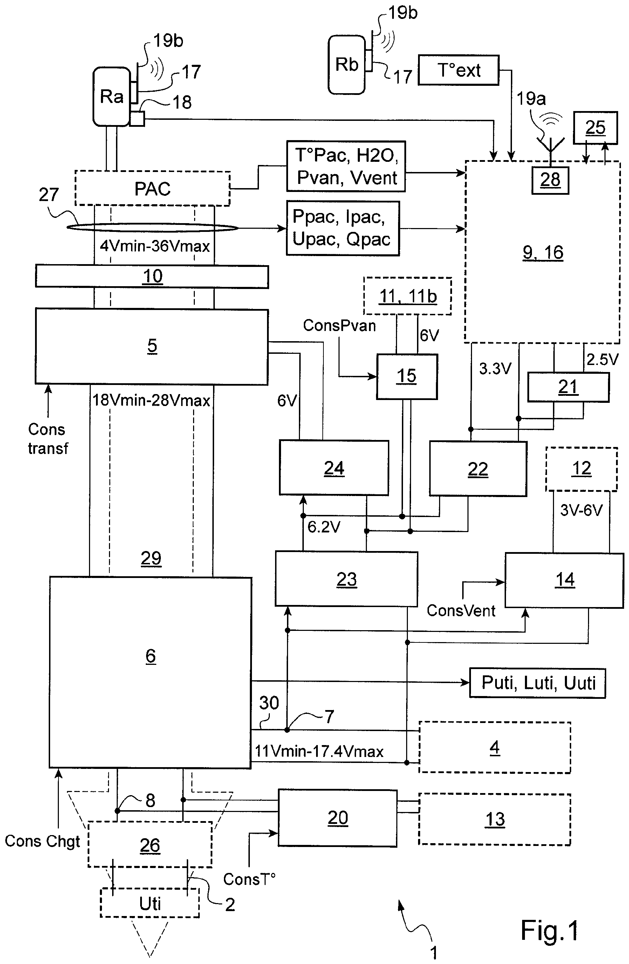

Comme on le voit sur la figure 1, le dispositif peut comporter plusieurs réservoirs amovibles Ra, Rb chacun doté d'une mémoire propre 17. Ceci permet à l'utilisateur d'évaluer, pour chaque réservoir Ra, Rb la quantité de combustible restante dans ce réservoir et l'autonomie énergétique restante. Chaque réservoir Ra, Rb est identifié par une donnée d'identification propre inscrite sur les moyens de mémorisation 17 qu'il porte et la communication par les antennes 19a, 19b est réalisée selon la technologie RFID.

Pour le calcul de l'autonomie restante du dispositif, le moyen d'évaluation 28 lit la quantité de combustible restant dans les réservoirs et, via le circuit de charge 6, une valeur estimée de la quantité d'énergie stockée dans la batterie 4.

Grâce à la liaison sans fil et la technologie RFID, le dispositif détermine la quantité de combustible restant dans les réservoirs situés dans l'environnement du dispositif 1 même si ceux ne sont pas reliés physiquement à la pile à combustible PAC, et en informe l'utilisateur via l'interface homme / machine 25. On note que l'interface homme/machine 25 peut comporter des moyens de commande pour par exemple commander le circuit de pilotage 9 pour qu'il autorise ou interdise le passage de la pile dans un état de fonctionnement de la zone de fonctionnement non satisfaisant. L'interface homme machine peut aussi comporter un moyen de fixer la puissance, la tension, l'intensité, et éventuellement la fréquence d'alimentation des bornes du réseau utilisateur 2 par le dispositif.

On note que la pile peut comporter des connecteurs électriques pour la relier de manière amovible au filtre 10 et/ou au convertisseur et/ou au circuit de pilotage 9, ce qui permet d'avoir un dispositif démontable en plusieurs éléments séparés que sont :
- la pile PAC,
- un ensemble électronique comportant le circuit 9, le convertisseur, le circuit de charge 6 et éventuellement la batterie 4 ;
- un ou plusieurs réservoirs de combustible tels que ceux décrits précédemment, avec ou sans mémoire 17 et avec ou sans antenne 19.

Pour le démarrage de la pile PAC on note que le circuit de pilotage 9 peut générer une consigne Cons transf de commande du convertisseur 5 telle que la consigne Cons transf prenne en compte l'inertie de démarrage de la pile et sa montée en température progressive.

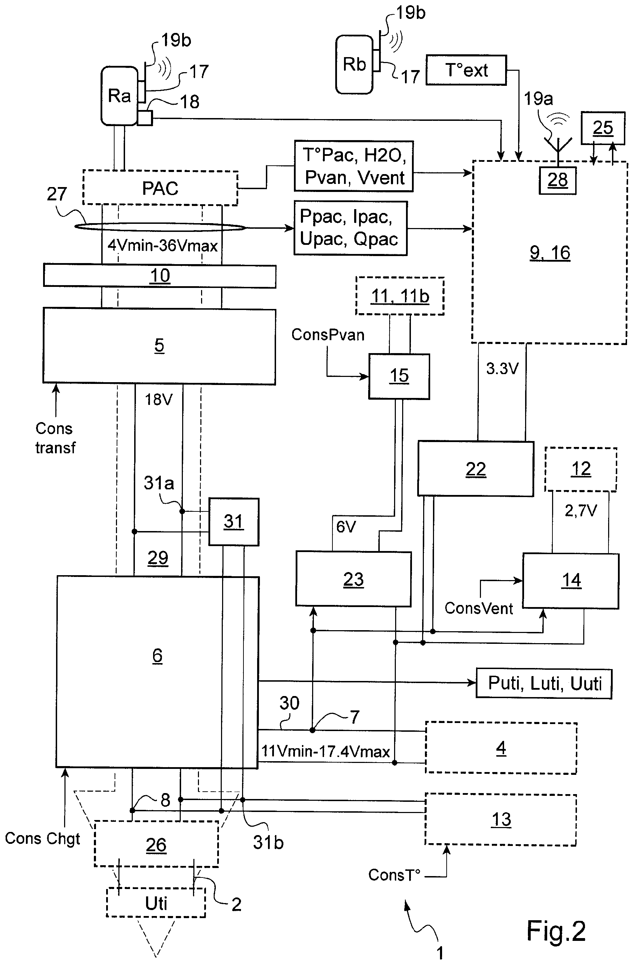

Un autre mode de réalisation du dispositif 1 d'alimentation selon l'invention est présenté à la figure 2. Ce dispositif 1 est identique à celui de la figure 1, les seules différences entre le dispositif de la figure 1 et celui de la figure 2 étant au niveau des moyens et modes d'alimentation du tapis chauffant 13, du régulateur de vanne 15, du régulateur de courant d'alimentation 22 et du ventilateur 12.

En effet l'alimentation du tapis chauffant 13 est ici réalisée à l'aide d'une interface de sélection 31 ayant :
- ses entrées électriques 31a reliées entre la sortie du convertisseur 5 et les entrées 29 du circuit de charge et décharge 6 ; et
- ses sorties électriques 31b reliées directement à des entrées d'alimentation du tapis chauffant 13 elles même directement reliées aux bornes d'alimentation 8 du réseau utilisateur Uti.
Dans ce mode de réalisation, le régulateur de chauffe 20 est supprimé et sa fonction de régulation de chauffe, en fonction de la consigne Con T°C, peut être intégrée au tapis 13 et / ou déportée au niveau de l'interface de sélection 31. L'interface de sélection 31 permet de réguler l'alimentation du tapis en utilisant de l'énergie prélevée en amont du circuit de charge de batterie 6, directement en sortie du convertisseur 5. Cette interface 31 alimente directement le tapis chauffant avec de l'énergie de la pile PAC convertie à l'aide du convertisseur 5. En cas de démarrage difficile du dispositif 1, par exemple par temps froid, ce mode permet d'utiliser le peu d'énergie produite par la pile PAC pour la chauffe de cette pile, en limitant l'usage d'énergie pour le rechargement de l'accumulateur 4. Ainsi le démarrage de la pile PAC par temps froid peut débuter en utilisant de l'énergie fournie par l'accumulateur 4 pour réchauffer la pile PAC avec le tapis 13 puis, dès que la pile PAC commence à produire un peu d'énergie, cette énergie est alors transmise par l'interface de sélection 31 au tapis 13 pour augmenter sa capacité de chauffe de la pile PAC et ainsi réduire le temps de mise en route de la pile PAC.
Dans ce mode de réalisation le convertisseur 5 est adapté à générer soit une alimentation en tension constante, en l'occurrence 18V dans le mode nominal, soit une alimentation variable de 18V à 2.4V dans le mode de démarrage de la pile PAC. Ainsi lorsque la pile est en mode de démarrage, l'interface de sélection relie les sorties du convertisseur 5 au tapis 13 et le convertisseur est alors régulé pour générer la tension variant entre 2.4 et 18V. La pile PAC et le convertisseur 5 jouent alors le rôle de source de courant variable et réglable par potentiomètre numérique relié au convertisseur 5, permettant ainsi de gérer les démarrages difficiles lorsque la pile est sèche.
A contrario, lorsque la pile produit suffisamment d'énergie pour que le chargeur de batterie puisse à la fois alimenter l'accumulateur 4 et le tapis 13, l'interface de sélection 18 est alors actionnée de manière à interdire la liaison électrique, via ses bornes, entre le convertisseur 5 et le tapis 13.
Dans ce mode de réalisation, le régulateur de tension 24 est supprimé, la fonction d'alimentation du convertisseur 5 pouvant dès lors être déportée au niveau du circuit de charge 6.
Le régulateur de courant d'alimentation 22 de la carte de gestion 16 n'est plus alimenté par le régulateur 23 comme dans le mode de la figure 1, mais est relié aux bornes de l'accumulateur 4.

Enfin dans ce mode de réalisation, la tension en sortie du régulateur 23 est de 6V continu pour alimenter le régulateur 15 de vanne 11, 11b, la tension en sortie du régulateur de courant 22 de la carte de gestion 16 est de 3,3V continu, la tension d'alimentation du ventilateur 12 générée par le régulateur 14 est de 2,7V continu (les alimentations 2,5V et 6V du mode de la figure 1 sont dès lors supprimées).

Bien entendu, l'invention n'est pas limité aux modes de réalisation décrits mais englobe toute variante entrant dans le champ de l'invention telle que définie par les revendications.

## Revendications

1. Dispositif (1) d'alimentation en énergie électrique d'un réseau utilisateur (2), le dispositif comprenant :
- une pile à combustible (PAC) ;
- un accumulateur d'énergie électrique (4) ;
- un convertisseur d'énergie électrique (5) relié d'une part à la pile à combustible (PAC) et d'autre part à un circuit de charge et décharge de l'accumulateur (6) lui-même relié d'une part à des bornes de l'accumulateur (7) et d'autre part aux bornes d'alimentation du réseau utilisateur (8),
**caractérisé en ce que** le convertisseur (5) est adapté à limiter la capacité de transfert d'énergie électrique de la pile à combustible (PAC) vers le réseau utilisateur (2), la pile à combustible (PAC) étant agencée pour avoir une capacité de production d'énergie électrique variable en fonction de cette capacité de transfert d'énergie électrique, et le dispositif (1) comporte un circuit électronique de pilotage (9) relié d'une part au convertisseur (5) de manière à commander la variation de la capacité de transfert et d'autre part au circuit de charge et décharge (6) pour sélectivement commander le transfert d'énergie électrique de la pile à combustible (PAC) vers l'accumulateur (4) et le transfert d'énergie électrique de l'accumulateur (4) vers les bornes d'alimentation (8) du réseau utilisateur (2).

2. Dispositif de génération d'énergie électrique selon la revendication 1, dans lequel la capacité de transfert d'énergie du convertisseur (5) est régulée par le circuit électronique de pilotage (6) en fonction d'au moins un paramètre courant de fonctionnement de la pile (PAC) choisi parmi :
- un taux d'humidité (H2O) dans la pile à combustible ;
- l'intensité et/ou la tension de courant électrique produit par la pile (Ipac, Upac) ;
- une température de fonctionnement de la pile (T°Pac) ;
- une puissance de courant électrique produit par la pile (Ppac),
- une quantité d'énergie électrique produite par la pile sur une période de temps donnée (QPac).

3. Dispositif de génération d'énergie électrique selon la revendication 2, dans lequel la pile à combustible est agencée de manière que sa capacité de production d'énergie aille en augmentant dès lors que la capacité de transfert d'énergie du convertisseur passe d'une première valeur prédéterminée de capacité de transfert à une seconde valeur prédéterminée de capacité de transfert, la seconde valeur étant supérieure à la première valeur.

4. Dispositif selon l'une quelconque des revendications précédentes, dans lequel le circuit électronique de pilotage est relié à un moyen de chauffe de la pile tel qu'un tapis chauffant électriquement (13) et/ou à un moyen de refroidissement de la pile tel qu'un ventilateur (12) et/ou à une vanne de contrôle 11 de débit de combustible vers la pile (PAC) et/ou à des capteurs de température de la pile (T°Pac) et/ou à une vanne d'évacuation d'eau contenue dans la pile (11b).

5. Dispositif selon l'une quelconque des revendications précédentes, comportant :
- un réservoir de combustible (Ra) relié à la pile pour l'alimenter en combustible ;
- des moyens (27, 28) adaptés à mesurer au moins un paramètre (Ppac, Ipac, Upac) représentatif d'une quantité d'énergie électrique produite par la pile (PAC) et à en déduire au moins une donnée représentative de la quantité de combustible restant dans le réservoir (Ra) ; et
- des moyens de mémorisation (17) de la dite donnée.

6. Dispositif selon la revendication 5, dans lequel le réservoir (Ra) est relié de manière amovible à la pile (PAC) et une partie au moins des moyens de mémorisation (17) est fixée sur le réservoir (Ra).

7. Dispositif selon la revendication 6, dans lequel :
- lesdits moyens d'évaluation (28) sont reliés à une première antenne de communication (19a) ; et
- la partie des moyens de mémorisation (17) fixée au réservoir est reliée électriquement à une seconde antenne de communication (19b) ; et
- les moyens d'évaluation (28) sont adaptés à inscrire, via les première et seconde antennes de communication (19a, 19b), ladite donnée sur la partie (17) des moyens de mémorisation fixée au réservoir (Ra, Rb).

8. Dispositif (1) selon l'une quelconque des revendications précédentes, dans lequel le circuit de charge et de décharge (6) de l'accumulateur (4) est adapté à autoriser :
- la charge de l'accumulateur lorsqu'une tension mesurée entre des entrées (29) du circuit de charge et de décharge (6) est supérieure à une tension mesurée entre des sorties (30) du circuit de charge et de décharge (6) qui sont reliées à l'accumulateur (4); et
- la décharge de l'accumulateur vers des bornes d'alimentation (8) du réseau utilisateur (2) lorsqu'une tension mesurée entre les sorties (30) du circuit de charge reliées à l'accumulateur (4) est supérieure à une tension mesurée entre les bornes d'alimentation (8) du réseau utilisateur (8).

9. Dispositif selon la revendication 8, dans lequel le circuit de charge et de décharge (6) de l'accumulateur (4) autorise la charge et la décharge de l'accumulateur en fonction d'une consigne de charge ou de décharge (Cons Chgt) émise par le circuit électronique de pilotage (9), pour cela, le circuit électronique de pilotage (9) est adapté à :
- évaluer la capacité de production d'électricité pouvant être produite par la pile à combustible (PAC) en fonction de paramètres courants de la pile ;
- évaluer l'énergie (Puti) consommée par le réseau utilisateur (2) ; et
- à générer une consigne de charge (Cons Chgt) de l'accumulateur à l'attention du circuit de charge et décharge (6) et une consigne d'augmentation de la capacité de transfert (Cons transf) à l'attention du convertisseur lorsque la capacité de production d'électricité évaluée est supérieure à l'énergie consommée par le réseau utilisateur (Puti) ; et
- à générer une consigne de décharge (Cons Chgt) de l'accumulateur (4) à l'attention du circuit de charge et décharge (6) et une consigne d'augmentation de la capacité de transfert (Cons transf) à l'attention du convertisseur (5) lorsque la capacité de production d'électricité évaluée est inférieure à l'énergie consommée par le réseau utilisateur (Puti).

10. Dispositif selon l'une quelconque des revendications, 8 ou 9, dans lequel le circuit de charge et de décharge (6) est adapté à faire varier, progressivement, sur une période de temps donnée la tension délivrée à l'accumulateur (4) via les sorties (30) du circuit de charge et de décharge (6) jusqu'à atteindre une tension de charge constante.

## Patentansprüche

1. Vorrichtung (1) zur Versorgung eines Nutzernetzwerks (2) mit elektrischer Energie, wobei die Vorrichtung umfasst:
- eine Brennstoffzelle (PAC);
- einen Speicher (4) für elektrische Energie;
- einen Wandler (5) für elektrische Energie, der einerseits mit der Brennstoffzelle (PAC) und andererseits mit einem Lade- und Entladekreis (6) zum Laden und Entladen des Speichers verbunden ist, wobei der Lade- und Entladekreis selbst einerseits mit Klemmen (7) des Speichers und andererseits mit Anschlussklemmen (8) des Nutzernetzwerks verbunden ist,
**dadurch gekennzeichnet, dass** der Wandler (5) angepasst ist, um die Übertragungskapazität an elektrischer Energie von der Brennstoffzelle (PAC) in Richtung des Nutzernetzwerks (2) zu begrenzen, wobei die Brennstoffzelle (PAC) so ausgebildet ist, dass sie eine Kapazität zur Erzeugung elektrischer Energie hat, die in Abhängigkeit von dieser Übertragungskapazität an elektrischer Energie variabel ist, und die Vorrichtung (1) einen elektronischen Steuerkreis (9) umfasst, der einerseits mit dem Wandler (5) verbunden ist, um die Veränderung der Übertragungskapazität zu steuern, sowie andererseits mit dem Lade- und Entladekreis (6), um die Übertragung elektrischer Energie von der Brennstoffzelle (PAC) in Richtung des Speichers (4) und die Übertragung elektrischer Energie von dem Speicher (4) in Richtung der Anschlussklemmen (8) des Nutzernetzwerks (2) selektiv zu steuern.

2. Vorrichtung zur Erzeugung elektrischer Energie nach Anspruch 1, bei der die Energieübertragungskapazität des Wandlers (5) von dem elektronischen Steuerkreis (6) in Abhängigkeit von mindestens einem aktuellen Betriebsparameter der Brennstoffzelle (PAC) reguliert wird, der ausgewählt wird aus:
- einem Feuchtigkeitsgehalt (H2O) in der Brennstoffzelle;
- der Stärke und/oder der Spannung (Ipac, Upac) des von der Brennstoffzelle erzeugten Stroms;
- einer Betriebstemperatur (T°Pac) der Brennstoffzelle;
- einer Leistung des von der Brennstoffzelle erzeugten elektrischen Stroms (Ppac),
- einer Menge an elektrischer Energie, die von der Brennstoffzelle über einen gegebenen Zeitraum (QPac) erzeugt wird.

3. Vorrichtung zur Erzeugung elektrischer Energie nach Anspruch 2, bei der die Brennstoffzelle so ausgebildet ist, dass sich ihre Energieerzeugungskapazität erhöhen wird, sobald die Energieübertragungskapazität des Wandlers von einem ersten vorgegebenen Übertragungskapazitätswert auf einen zweiten vorgegebenen Übertragungskapazitätswert übergeht, wobei der zweite Wert größer als der erste Wert ist.

4. Vorrichtung nach einem der vorhergehenden Ansprüche, bei der der elektronische Steuerkreis mit einem Heizmittel zum Erwärmen der Brennstoffzelle, wie z. B. einer elektrischen Heizmatte (13), und/oder mit einem Kühlmittel zum Kühlen der Brennstoffzelle, wie z. B. einem Ventilator (12), und/oder mit einem Regelventil (11) zum Regeln der Durchflussmenge an Brennstoff in Richtung der Brennstoffzelle (PAC) und/oder mit Temperatursensoren (T°Pac) für die Brennstoffzelle und/oder mit einem Ventil zum Ableiten von in der Brennstoffzelle enthaltenem Wasser (11b) verbunden ist.

5. Vorrichtung nach einem der vorhergehenden Ansprüche, umfassend:
- einen Brennstoffbehälter (Ra), der mit der Brennstoffzelle verbunden ist, um sie mit Brennstoff zu versorgen;
- Mittel (27, 28), die angepasst sind, um mindestens einen Parameter (Ppac, Ipac, Upac) zu messen, der repräsentativ für eine von der Brennstoffzelle (PAC) erzeugte Menge an elektrischer Energie ist, und daraus mindestens eine gegebene Größe herzuleiten, die repräsentativ für die Brennstoffmenge ist, die in dem Behälter (Ra) verbleibt; und
- Speichermittel (17) zum Speichern der genannten gegebenen Größe.

6. Vorrichtung nach Anspruch 5, bei der der Behälter (Ra) auf abnehmbare Weise mit der Brennstoffzelle (PAC) verbunden ist, und mindestens ein Teil der Speichermittel (17) an dem Behälter (Ra) befestigt ist.

7. Vorrichtung nach Anspruch 6, bei der:
- die genannten Auswertungsmittel (28) mit einer ersten Kommunikationsantenne (19a) verbunden sind; und
- der Teil der Speichermittel (17), der am Behälter befestigt ist, elektrisch mit einer zweiten Kommunikationsantenne (19b) verbunden ist; und
- die Auswertungsmittel (28) angepasst sind, um über die erste und die zweite Kommunikationsantenne (19a, 19b) die gegebene Größe in den Teil (17) der Speichermittel einzuschreiben, der am Behälter (Ra, Rb) befestigt ist.

8. Vorrichtung (1) nach einem der vorhergehenden Ansprüche, bei der der Lade- und Entladekreis (6) des Speichers (4) daran angepasst ist, zu gestatten:
- das Laden des Speichers, wenn eine zwischen den Eingängen (29) des Lade- und Entladekreises (6) gemessene Spannung größer als eine Spannung ist, die zwischen den mit dem Speicher (4) verbundenen Ausgängen (30) des Lade- und Entladekreises (6) gemessen wird; und
- das Entladen des Speichers in Richtung der Anschlussklemmen (8) des Nutzernetzwerks (2), wenn eine zwischen den mit dem Speicher (4) verbundenen Ausgängen (30) des Ladekreises gemessene Spannung größer als eine Spannung ist, die zwischen den Anschlussklemmen (8) des Nutzernetzwerks (8) gemessen wird.

9. Vorrichtung nach Anspruch 8, bei der der Lade- und Entladekreis (6) des Speichers (4) das Laden und das Entladen des Speichers (4) in Abhängigkeit von einem Lade- oder Entladesollwert (Cons Chgt) gestattet, der von dem elektronischen Steuerkreis (9) ausgegeben wird, wobei der elektronische Steuerkreis (9) deshalb daran angepasst ist:
- die Stromerzeugungskapazität, die von der Brennstoffzelle (PAC) in Abhängigkeit von aktuellen Parametern der Brennstoffzelle erzeugt werden kann, auszuwerten;
- die von dem Nutzernetzwerk (2) verbrauchte Energie (Puti) auszuwerten; und
- einen Ladesollwert (Cons Chgt) des Speichers für den Lade- und Entladekreis (6) und einen Sollwert (Cons transf) der Erhöhung der Übertragungskapazität für den Wandler (5) zu erzeugen, wenn die ausgewertete Stromerzeugungskapazität größer als eine von dem Nutzernetzwerk verbrauchte Energie (Puti) ist; und
- einen Entladesollwert (Cons Chgt) des Speichers (4) für den Lade- und Entladekreis (6) und einen Sollwert (Cons transf) zur Erhöhung der Übertragungskapazität für den Wandler (5) zu erzeugen, wenn die ausgewertete Stromerzeugungskapazität kleiner als eine von dem Nutzernetzwerk verbrauchte Energie (Puti) ist.

10. Vorrichtung nach einem der Ansprüche 8 oder 9, bei der der Lade- und Entladekreis (6) angepasst ist, um über einen gegebenen Zeitraum die dem Speicher (4) über die Ausgänge (30) des Lade- und Entladekreises (6) zugeführte Spannung fortschreitend zu ändern, bis eine konstante Ladespannung erreicht ist.

## Claims

1. Device (1) for supplying electrical energy to a user network (2), the device comprising:
- a fuel cell (PAC);
- an electric energy accumulator (4);
- an electric energy converter (5) connected on the one hand to the fuel cell (PAC) and on the other hand to a charging and discharging circuit (6) of the accumulator itself connected on the one hand to terminals (7) of the accumulator and on the other hand to the power supply terminals (8) of the user network,
**characterized in that** the converter (5) is adapted to limit the capacity for electrical energy transfer from the fuel cell (PAC) to the user network (2), the fuel cell (PAC) being adapted to have an electric energy production capacity varying as a function of this electrical energy transfer capacity, and the device (1) includes an electronic control circuit (9) connected on the one hand to the converter (5) to control the variation of the transfer capacity and on the other hand to the charging and discharging circuit (6) selectively to control the transfer of electrical energy from the fuel cell (PAC) to the accumulator (4) and the transfer of electrical energy from the accumulator (4) to the power supply terminals (8) of the user network (2).

2. Electrical energy generation device according to claim 1, wherein the energy transfer capacity of the converter (5) is regulated by the electronic control circuit (6) as a function of at least one current operating parameter of the cell (PAC) chosen from:
- a moisture content (H2O) in the fuel cell;
- the electric current and/or the voltage (Ipac, Upac) produced by the cell;
- an operating temperature (T°Pac) of the cell;
- an electric current power (Ppac) produced by the cell ;
- a quantity (QPac) of electrical energy produced by the cell over a given period of time.

3. Electric energy generation device according to claim 2, wherein the fuel cell is such that its energy production capacity increases as the energy transfer capacity of the converter changes from a first predetermined transfer capacity value to a second predetermined transfer capacity value, the second value being greater than the first value.

4. Device according to any one of the preceding claims, wherein the electronic control circuit is connected to cell heating means such as an electrically heated mat (13) and/or to cell cooling means such as a fan (12) and/or to a valve (11) to control fuel flow to the cell (PAC) and/or to cell temperature (T°Pac) sensors and/or to a valve (11b) for evacuation of water contained in the cell.

5. Device according to any one of the preceding claims, including:
- a fuel tank (Ra) connected to the cell to supply it with fuel;
- means (27, 28) adapted to measure at least one parameter (Ppac, Ipac, Upac) representing a quantity of electrical energy produced by the cell (PAC) and to deduce therefrom at least one data item representing the quantity of fuel remaining in the tank (Ra); and
- means (17) for storing said data.

6. Device according to claim 5, wherein the tank (Ra) is removably connected to the cell (PAC) and at least a portion of the storage means (17) is fixed to the tank (Ra) .

7. Device according to claim 6, wherein:
- said evaluation means (28) are connected to a first communication antenna (19a); and
- the portion of the storage means (17) fixed to the tank is electrically connected to a second communication antenna (19b); and
- the evaluation means (28) are adapted to write said data item in the portion of the storage means (17) fixed to the tank (Ra, Rb) via the first and second communication antennas (19a, 19b).

8. Device (1) according to any one of the preceding claims, wherein the charging and discharging circuit (6) of the accumulator (4) is adapted to allow:
- charging of the accumulator when a voltage measured between inputs (29) of the charging and discharging circuit (6) is greater than a voltage measured between outputs (30) of the charging and discharging circuit (6) that are connected to the accumulator (4); and
- discharging the accumulator to power supply terminals (8) of the user network (2) when a voltage measured between the outputs (30) of the charging circuit connected to the accumulator (4) is greater than a voltage measured between the power supply terminals (8) of the user network (8).

9. Device according to claim 8, wherein the charging and discharging circuit (6) of the accumulator (4) allows charging and discharging of the accumulator as a function of a charging or discharging set point (Cons Chgt) emitted by the electronic control circuit (9), to which end the electronic control circuit (9) is adapted:
- to evaluate the production capacity for electricity that can be produced by the fuel cell (PAC) as a function of current parameters of the cell;
- to evaluate the energy (Puti) consumed by the user network (2); and
- to generate a charging set point (Cons Chgt) of the accumulator for the attention of the charging and discharging circuit (6) and a set point (Cons transf) for increasing the transfer capacity for the attention of the converter when the evaluated electricity production capacity is greater than the energy (Puti) consumed by the user network; and
- to generate a discharge set point (Cons Chgt) of the accumulator (4) for the attention of the charging and discharging circuit (6) and a set point (Cons transf) for increasing the transfer capacity for the attention of the converter (5) when the evaluated electricity production capacity is less than the energy (Puti) consumed by the user network.

10. Device according to either one of claims 8 or 9, wherein which the charging and discharging circuit (6) is adapted to vary progressively over a given period of time the voltage delivered to the accumulator (4) via the outputs (30) of the charging and discharging circuit (6) until a constant charging voltage is reached.
